Europäisches Patentamt

(19) European Patent Office    (11) Publication number:    **0 247 986**
Office européen des brevets    **B1**

(12)                 **EUROPEAN PATENT SPECIFICATION**

(45) Date of publication of the patent specification:    (51) Int. Cl.⁵: **B 31 B  1/44,** B 31 B  1/66,
28.02.90                                                    **B 31 F  7/00**

(21) Application number: 87850147.7

(22) Date of filing: 30.04.87

(54) Expandable type lid welding piston.

(30) Priority: 26.05.86 SE 8602386

(43) Date of publication of application:
02.12.87 Bulletin 87/49

(45) Publication of the grant of the patent:
28.02.90 Bulletin 90/09

(84) Designated Contracting States:
AT BE CH DE FR GB IT LI LU NL SE

(56) References cited:
DE-C-933 546

(73) Proprietor: Akerlund & Rausing Licens Aktiebolag
Box 547
S-175 26 Järfälla (SE)

(72) Inventor: Dahlin, Rune
Hagtornsvägen 1
S-19435 Upplands Väsby (SE)
Inventor: Linderoth, Gustaf
Frihetsvägen 21
S-17522 Järfälla (SE)

(74) Representative: Avellan-Hultman, Olle
Avellan-Hultman Patentbyra AB P.O. Box 5366
S-102 46 Stockholm 5 (SE)

EP 0 247 986 B1

LIBERGRAF, STOCKHOLM 1990

## Description

Expandable lid welding piston comprising two piston parts, namely a formation part and an expansion part, which are axially movable in relation to each other, and in which the expansion part is operable to provide peripheral expansion of a section of the piston when said two parts are moved together, the expansion part comprising an expansion disc made of a deformable material and the formation part comprising a bottom plate having an upper surface supporting and guiding at least a part of the bottom surface of the expansion disc and in which the outer peripheral surface of the bottom plate is of the same shape as the outer peripheral edge of the expansion disc.

Said expandable type press piston is in the first place intended for pressing a lid having upwardly projecting rims to the inner surface of a tubular container while joining, for instance welding together, the lid and the container. The invention is useful for many other purposes whereby it is desired to provide a temporary radial expansion of a piston, for instance when glue-pressing an inner lid or a similar means in a container tube, when press-forming a part of a tube etc.

The invention has been made especially in connection to high frequency welding of an inner lid in a tubular container, especially a tube having a body of a material which does not absorb high frequency energy, like cardboard, plastic or a similar material, and in which the inner surface of the tube or the outer surface of the lid rim, or both, are formed with a layer of a high frequency receivable material, for instance aluminum, and on said layer a heat weldable layer of material like a suitable plastic, and in which the high frequency receivable layer of material, when being subjected to high frequency currents, is heated so that the outer layer of said weldable material melts and the container parts are welded together.

Although it is stated that the invention is useful in many technical fields and for many different purposes, the invention will in the following mainly be described with reference to weld joining of a lid in a tubular container.

For providing such a pressing together of the lid rim and the inner surface of the container that the container becomes liquid proof, and even gas proof, it is known to use a radially expandable piston, which is expanded when the high frequency current is connected, so that the two parts of material are pressed together with a predetermined pressure until the high frequency current is disconnected or the weldable layer or layers of material have solidified and become cool enough to give a sealed joint. In many cases the lid is shaped from a plane lid blank which is pressed through a formation ring provided just above the container tube and is moved directly down in the open end of the container tube, preferably by means of the same expandable press piston as mentioned above.

In similar connections a piston of the type shown in the US patent 2 423 965 (J. Coyle) or in applicant's Swedish patent No. 8 302 841-5 (= US-1-4 640 733) has been used.

In both cases the piston or the press piston comprises two mutually movable part, between which an elastic rubber material like a rubber ring is provided which upon moving together of the two piston parts is compressed axially and is thereby expanded radially outwards.

The expandable piston shown in said US patent 2 423 965 gives a very large press surface in that the rubber material has a large dimension in the axial direction of the piston and is pressed out into contact with a large surface of the lid rim or flange. The said known apparatus is not suitable for providing a powder proof or even liquid proof container,

a) especially since the expanded rubber material to a large extent will be in contact with the folds and wrinkles which irrevocably are formed when lid blank is pressed down through the formation ring. Said folds and wrinkles become icreasingly larger following the distance from the bottom plane of the lid; and

b) since it is difficult, apart from the existence of the folds and wrinkles, to provide such strong press force as should have been necessary as to compress the welded material parts strong enough as to obtain a thin partial joint giving a gas proof seal, a so called barrier, against gas creap leakages in the weld material or materials.

Applicant's above mentioned Swedish patent 8 302 841-5 solves the said problem both in that the expandable rubber ring of the press piston has a little axial extension, whereby only a little part of the common surface of the lid and the tube is compressed, and it is possible to get a relatively stronger contact pressure than is possible with the apparatus according to the above mentioned US patent, and also in that the expandable rubber material is located relatively close the bottom plane of the lid, where the wrinkles and folds are substantially less than close to the upper edge of the lid rim, and therefore there is a minimum of obstacles to an effective partial compression of the lid and container tube parts.

In both known cases substantially ring formed expandable rubber elements are used, which are mainly suited only for containers having a circular cross-section form, and which for some purposes can be considered to give a too soft contact pressure. Also, rubber rings are worn relatively quickly, and the operation of exchanging rubber ring causes operation stops and costs. Further, rubber rings generally can not be provided so as to be positevely guided in the return direction after having been expanded, and in rapidly operating machines it may happen that the rubber rings do not regain their initial shape with the entire ring located inside the peripheral surface of the press piston before the said piston is retracted from the interior of the end of the container, and as a consequence the rubber ring may stick to the lid rim and may even be forced off the press piston.

In many cases it is also a wish to manufacture a container having another cross section form than a circular cylindric form; in some cases it may be a wish to use a stronger contact pressure than can be obtained by means of a rubber ring; and in some cases it may be a wish to provide an irregularly strong compression of the lid rim and the container tube, and this is normally not possible when using press pistons having rubber rings as the expandable means.

Therefore there has been a need for a press piston for the above indicated purpose, which is designed such:

– that the expandable means operates substantially positively guided both in the expansion direction and in the retraction direction and which thereby operates quicker and safer than the priorly known press pistons,

– that it is possible to exactly guide and determine the place where the expandable means is to be expanded,

– that the press surface of the expandable means can be given any optional shape and size and consequently a varying press width,

– that it can be used for making containers having other form than a circular cylindrical form, for instance oval, square, polygonal etc.

– that it is possible, by selecting the material and the thickness etc. of the expandable means, to vary the press force as desired,

– and that it is possible to localize the press surface, as desired, so close to the lid plane as to avoid any problems that may appear depending on wrinkles and folds of the lid rims.

Thus, the invention relates to a press piston comprising two parts, named formation part and expansion part, which are axially movable in relation to each other, and in which the expansion part is operated, when moving to two parts together, to provide an expansion of at least a section of the press piston, and in the first place it is characterized in that the expansion disc is normally cup-shaped, that the bottom plate is at least the same size as the outer peripheral edge of the expansion disc in its normal condition, and that the formation and expansion parts are so arranged that axial movement of these parts towards one another results in flattening of the expansion disc from its cup-shape such that the outer peripheral edge thereof extends beyond the periphery of the bottom plate.

The expansion disc can be made from a plain blank or it may be form-moulded or otherwise shaped to a cup.

Further characteristics of the invention will be evident from the following detailed specification in which reference will be made to the accompanying drawings which show an embodiment of an expandible press piston according to the invention as a non restricting example thereof.

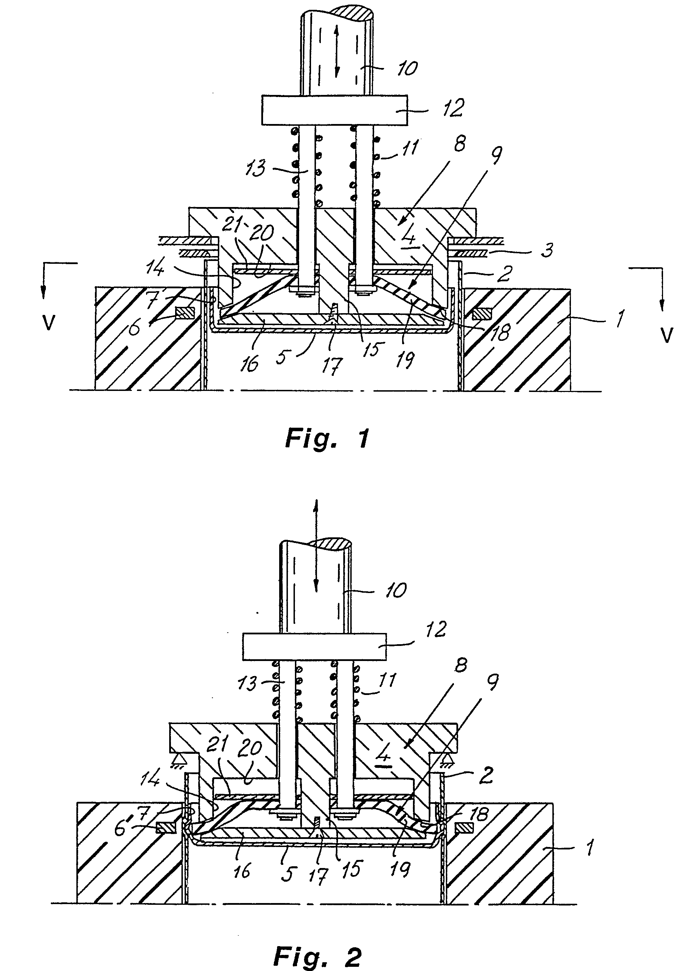

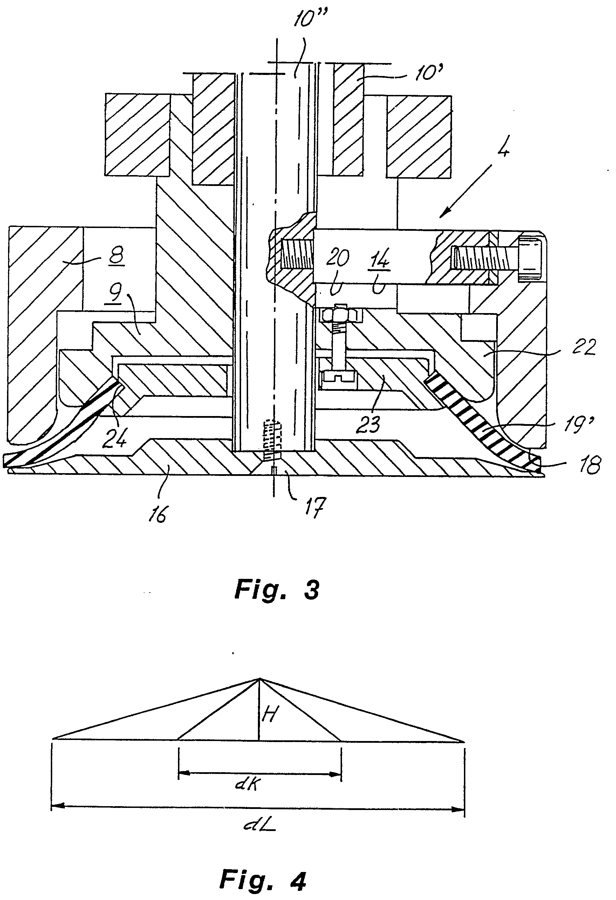

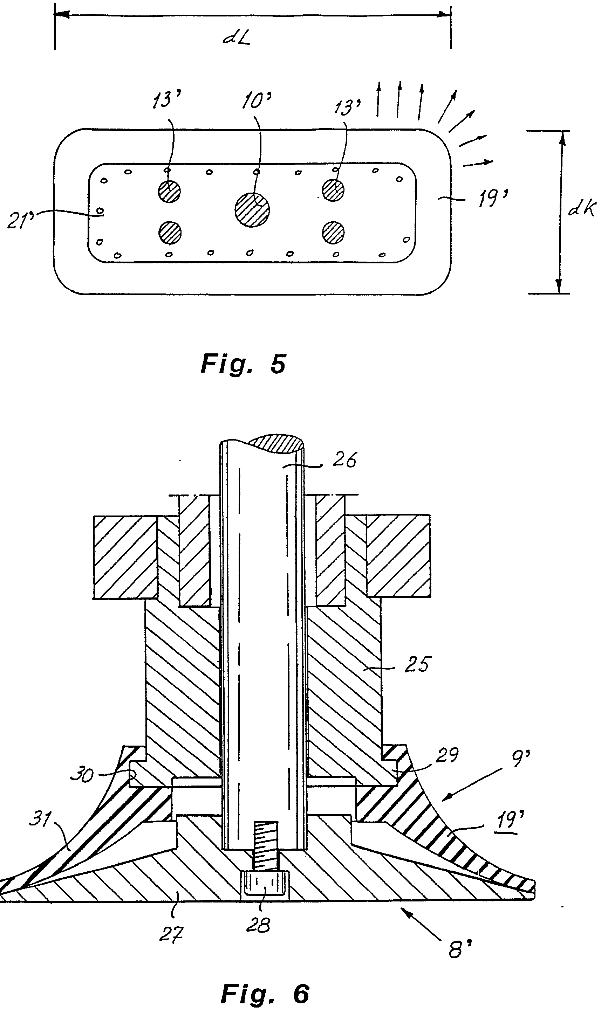

In the drawings figure 1 diagrammatically shows an axial cross-section through an apparatus according to the invention useful for welding of a lid, having a fold up edge rim, inside a container and shown before the press piston is expanded. Figure 2 similarly shows the apparatus after the piston has been expanded. Figure 3 shows a slightly modified embodiment of an apparatus according to the invention in the same type of view as in figure 1. Figure 4 is an explanatory sketch corresponding to an axial cross-section through an expandable piston according to the invention, and figure 5 shows a horizontal cross-section through a press piston according to the invention as seen along line V - V of figure 1. Figure 6 is a modified embodiment of the apparatus shown in figure 3.

The apparatus shown in figures 1 and 2 of the drawings generally comprises a carrier 1 for a container sleeve 2, a formation ring 3 for a plain lid blank and a press piston 4 for shaping the lid blank and pressing the lid 5 into a container sleeve 2 provided in the carrier 1 and for pressing the upwardly projecting rim of the lid into contact with the inner surface of the sleeve 2.

The carrier is of a type which is known per se, and at a predetermined place it is provided with a high frequency welding ring 6 operated to emit a high frequency current at the same time as the press piston compresses the lid 5 and the container sleeve 2. Above the carrier a formtion ring 3 of known type is fixedly mounted. A lid blank is intended to placed on the formation ring 3, and when the press piston 4 is moved down into the open end of the container sleeve 2 said piston forms the lid blank with an all around upwardly extending rim 7 over which the lid 5 and the sleeve 2 are adapted to become sealingly weld connected.

Since both the carrier 1 with the formation ring 3 and the packing method are known per se the said part and the method respectively will not be described in detail.

The press piston comprises two parts which are axially movable in relation to each other, named formation part 8 and expansion part 9, which are mounted as an integral unit at the end of an axially movable shaft 10, so that the piston can be displaced between an upper position above the formation ring 3 and a lower position in which the piston together with the lid 5 is located introduced in the container sleeve. The displacement upwards and downwards of the press piston 4 is also made as known per se. The formation part 8 of the piston is movable on the shaft 10 against the action of several pressure springs 11 acting between the upper side of the formation part 8 and a fixed support 12 of the shaft 10. Each spring 11 is maintained by a carrier screw 13 which with one end thereof is fixed mounted in the support 12 and with the opposite end carries the expansion part 9. The expansion part 9 thereby is fixed mounted in the shaft 10, whereas the formation part 8 is displacable on the shaft 10 in relation to the expansion part 9.

The formation part 8 of the piston is formed as a cup 14 which is open at the bottom, and a central pin 15 in which a bottom plate 16 is mounted by means of a screw 17 or any equivalent means. The bottom pin 15 extends to a level slightly lower than the bottom edges 18 of the cup 14 so that a gap or slot is formed between the upper surface of the bottom plate 16 and the bottom surface of the cup edges 18, which gap is suited for passing an expansion means, for instance a ring or disc 19 of a material that can adopt the cup-shape as shown in figure 1, and that can be completely or partly flattened out as shown in figure 2, whereby the circumference of the ring or disc 19 is increased. The cup shaping of the expansion disc 19 can be provided by a positive guiding from the cup 14 of the formation part 8 or by a formation of the expansion disc 19 to cup-shape from a plain blank. Depending on the intended extent of increase of the circumference the material of the ring or disc 19 may be more or less elastic or deformable. In case a relatively large increase of the circumference is desired the ring or disc can be made of rubber, fibre reinforced rubber, elastical plastic or similar material, and in case it is enough to get only a relatively slight increase of the circumference it is possible to use a relatively hard or harder reinforced rubber or plastic material, and even a metal like brass, sping steel etc. The ring or disc 19 preferably has an even thickness and it is formed with a central bore corresponding to the centre pin 15 of the formation part 8. The expandable disc 19 is fixed connected to the piston shaft 10 over the carrier screws 13 which are preferably evenly distributed round the piston shaft 10 and provided on a suitable radial distance from, the vertical shaft of the piston. In order to prevent the expandable disc from becoming folded when the piston shaft 10 with the expandable disc is moved in relation to the formation part 8 a support disc 21 can be mounted on the carrier screws 13 on top of the expandable disc 19. The expandable disc should have such dimension that, in its non-actuated condition, it is located entirely inside the circumscribing surface of the formation part 8 and the bottom disc 16.

In the embodiment according to figure 3 the expandable disc 19' is clamped between an upper support disc 22 and a lower support disc 23 having a shoulder 24 against which the edge of the expandable disc is supported. In this case the expansion of the disc 19' is provided in that a tubular shaft 10' is displacable outside a solid, fixed shaft 10" on which the bottom disc 16 is fixed mounted. If the shoulder 24 of the lower support disc 23 is formed with a larger outer dimension or diameter than the bore of the expandable disc 19' in its normal condition the cup-shape of the disc is increased and there are less friction forces against the bottom edge 18 of the cup 14 and against the bottom plate 16.

The magnitude of the expansion of the expandable disc 19 is in the first place determined by the possibility of the expandable disc 19 to move in the vertical direction between the bottom 20 of the cup 14 of the formation part 8 and the bottom plate 16. The expansion ability increases following an increased such vertical distance of stroke. In case of circular cylindrical piston the vertical movement in relation to the diameter is the sole factor determining the possibility of vertical movement.

The press piston may, however, be of may other shapes, for instance oval, square, rectangular or polygonal preferably having rounded corners, or any other shapes as easily appreciated by the expert in the field, and for such non-circular forms the possibility of expansion is determined both by the possibility of movement in the vertical direction and also of the horizontal length outside the connection place at the carrier screws 13 or the support disc 21.

Figures 4 and 5 illustrate one of many possible examples of noncircular container forms for which the press piston can be used. In the illustrated case the expandable disc has a largest horizontal extension dL and a least horizontal extension dK and can be moved vertically the distance H. If the expandable disc in this case is connected at or close to the centre of the piston shaft the disc should in the dK-direction get a larger horizontal elongation than in the dL-direction. In some cases this difference can be utilized as an advantage, namely if there is a desire of a larger expansion and/or a stronger contact pressure at certain places than at other places. If, oppositely, such a differing expansion is to be avoided the support disc 21' can be made with the same shape as the container, and the expandable disc 19' can be connected adjacent the outer edges of the said support disc 21' and can be formed so that the outer edges thereof in its non-expanded condition has the same form as the container 2 and the carrier 1. Thereby the same expansion is obtained in all directions of dL and dK and at the corners.

The said expansion is diagrammatically marked with the arrows of figure 5. If it should be desired to increase or reduce the contact pressure of the expandable disc at some place it is possible to change the point of connection for the expandable disc in the direction towards or away from the shaft 10' of the press piston respectively.

Since the expandable disc is operated by the piston shaft 10 and 10' resp., whereby the force is applied mainly on level with the disc, the disc is subjected to very little, if any, vertical compression, and therefore it is possible to provided much stronger contact pressure than is possible with the above mentioned previously known apparatus, and it is also possible to provide much narrower press edges than has so far been possible. It should be free to any expert to form the expandable disc of any suitable material, with any desired form, of any thickness and for any desired expansion. The outer edge of the expandable disc can be made straight, rounded, pointed or otherwise formed as desired. By making the upper part of the bottom plate conical upwards-downwards and giving the bottom edges 18 of the formation part a corresponding shape it is possible to guide the expandable disc downwards-outwards upon expansion, so that the outer edge thereof attacks the lid rim very close to the lid plane. Alternatively it is also possible to form the bottom plate thicker or to give said plate any other form than the illustrated one thereby directing the outer edge of the expandable disc towards exactly desired places.

The press piston illustrated in an axial cross-section in figure 6 differs from the above described press piston mainly in that the formation part has no formation cup, like for instance in figure 3, but it is provided only of an expansion disc 19' connected to a fixed carrier sleeve 25 in which an axially movable shaft 26 is mounted, so that the sleeve 25 with the expansion disc 19' and the shaft 26 are axially movable in relation to each other. The bottom plate 27 is connected the shaft 26 by the screw 28. The carrier shaft 26 can be operated by means of d pneumatic or hydraulic cylinder or by means of a prestressed mechanical spring.

Rather than making the sleeve 25 stationary and the shaft axially movable it is, of course, possible to make the shaft stationary and the sleeve movable.

The expansion disc 19' is an integral unit made of any suitable elastic or elastically deformable material like rubber, which is preferably form, moulded to provide the illustrated cup-shape in the normal condition of the disc. The bottom part of the sleeve 25 has an annular rib 29 and the expansion disc 19' has an equivalent annular inner recess 30 by which the disc is connected to the sleeve. The disc preferably is formed with an expansion lip 31 which is conically tapering in the direction radially out from the centre thereof and to a place adjacent the outer periphery thereof, from where the lip is of even thickness. For normal use in pressing the rim of a lid to the inner surface of for instance a circular container tube having a diameter of about 100 - 110 mm the expansion lip 30 can be made of urethane rubber of 60 - 100° Shore or preferably 90 - 100° Shore, and the outer part of the press lip may have a thickness of 2 - 5 mm or preferably about 3 mm.

It is to be understood that the above description and the embodiments of the invention illustrated in the drawings are only of examplifying character.

## Claims

1. Expandable lid welding piston (4) comprising two piston parts, namely a formation part (8; 8') and an expansion part (9; 9'), which are axially movable in relation to each other, and in which the expansion part (9; 9') is operable to provide peripheral expansion of a section of the piston (4) when said two parts are moved together, the expansion part (9; 9') comprising an expansion disc (19; 19') made of a deformable material and the formation part (8; 8') comprising a bottom plate (16; 27) having an upper surface supporting and guiding at least a part of the bottom surface of the expansion disc (19; 19'), and in which the outer peripheral surface of the bottom plate is of the same shape as the outer peripheral edge of the expansion disc, *characterized* in that the expansion disc (19; 19') is normally cup-shaped, that the bottom plate (16; 27) has at least the same size as the outer pripheral edge of the expansion disc (19; 19') in its normal condition, and that the formation and expansion parts (8, 9; 8', 9') are so arranged that axial movement of these parts towards one another results in flattening of the expansion disc (19; 19') from its cup-shape such that the outer peripheral edge thereof extends beyond the periphery of the bottom plate.

2. Press piston according to claim 1, *characterized* in that the expansion disc (19; 19') is positively guided in its movement both to a position with the outer periphery thereof radially outside that of the bottom plate (8, 8') and back to a withdrawn position with the outer periphery thereof radially inside that of said bottom plate (8, 9').

3. Press piston according to claim 1 or 2, *characterized* in that the expansion disc (19) or a part thereof adjacent the outer peripheral surface thereof is of substantially even thickness, and in that the disc is made of rubber, plastic, reinforced rubber or reinforced plastic, or is made of metal.

4. Press piston according to any of the preceding claims and being of substantially circular cylindrical type, *characterized* in that the expansion disc (19; 19') is fixedly mounted at or close to the centre shaft for the axial mutual displacement of formation part (8; 8') in relation to the expansion part (9; 9').

5. Press piston according to any of the preceding claims, *characterized* in that the formation part (8) is formed with an inner cup (14) the edges of which provide, in combination with the bottom plate (16), an all around extending slot (16; 18) through which the peripheral part of expansion disc (19) can be expelled when the two parts (8, 9) are moved together, and in which said cup (14) is of substantially the same shape and size as the main body of the formation part (8), and in which the expansion disc (19) is movable up and down in said cup (14).

6. Press piston according to any of the preceding claims *characterized* in that the expansion disc (19), which is cup-shaped in its normal condition, cooperates with a support disc (21) which acts as a support for the expansion disc (19) during the axial mutual displacement of the formation part (8) and the expansion part (9).

7. Press piston according to claim 6 having another crossection shape than a circular cylindrical form, *characterized* in that the support disc (21) has substantially the same shape as the press piston but is smaller than the press piston, and in that the expansion disc (19) is fixedly mounted at or close to the outer edge of the support disc (21).

8. Press piston according to claim 6 or 7, *characterized* in that the expansion disc (19') is clamped between an upper and a lower support disc (22, 23) which provide a downwarly-outwardly extending clamp groove having a shoulder (24) for the expansion disc (19'), which discs form the expansion disc (19') to cup-form when clampling a plain expansion disc blank therebetween.

9. Press piston according to claim 8, *characterized* in that the shoulder (24) of the support disc or discs has a larger outer dimension (diameter) than the connection bore of an expansion disc (19') made of an elastic material in its normal condition.

## Patentansprüche

1. Spreizbarer Deckelschweißstempel (4) mit zwei Stempelteilen, nämlich einem Formgebungsteil (8; 8') und einem Spreizteil (9; 9'), die axial relativ zueinander bewegbar sind, wobei das Spreizteil (9; 9') bei seiner Betätigung eine Spreizung eines Abschnitts des Stempels (4) hervorruft, wenn die beiden Teile zusammenbewegt werden, das Spreizteil (9; 9') eine Spreizscheibe (19; 19') aus verformbarem Material aufweist, das Formgebungsteil (8; 8') eine Bodenplatte (16; 27) mit einer oberen Fläche aufweist, die mindenstens einen Teil der unteren Fläche der Spreizscheibe (19; 19') stützt und führt und die äußere Umfangsfläche der Bodenplatte (16; 27) dieselbe Form wie die äußere Umfangskante der Spreizscheibe (19; 19') hat, dadurch gekennzeichnet, das die Spreizscheibe (19; 19') in der Normalstellung becherförmigausgebildet ist, daß die Bodenplatte (16; 27) mindestens dieselbe Größe wie die äußere Umfangskante der in ihrer Normalstellung befindlichen Spreizscheibe (19; 19') hat und daß die Formgebungs- und Spreizteile (8, 9; 8', 9') derart angeordnet sind, daß eine Axialbewegung dieser Teile gegeneinander zu einer solchen Abflachung der Becherform der Spreizscheibe führt daß deren äußere Umfangskante sich über den Umfang der Bodenplatte hinaus erstreckt.

2. Preßstempel nach Anspruch 1, dadurch gekennzeichnet, daß die Spreizscheibe (19; 19') zwangsgeführt ist bei ihrer Bewegung sowohl in eine Stellung, in der sich ihr äußerer Umfang radial außerhalb dessen der Bodenplatte (8; 8') befindet, als auch zurück in eine zurückgezogene Position, in der ihr Außenumfang radial innerhalb dessen der Bodenplatte (8; 8') liegt.

3. Preßstempel nach Anspruch 1 oder 2, dadurch gekennzeichnet, daß die Spreizscheibe (19) oder derjenige Teil von ihr, der sich nahe ihrer äußeren Umfangsfläche befindet, im wesentlichen von gleichmäßiger Dicke ist und daß die Spreizscheibe aus Gummi, Kunststoff, verstärktem Gummi, verstärktem Kunststoff oder aus Metall hergestellt ist.

4. Preßstempel nach einem der vorhergehenden Ansprüche mit im wesertlichen kreiszylindrischer Form, dadurch gekennzeichnet, daß die Spreizscheibe (19; 19') an oder nahe dem zentralen Schaft für die gegenseitige Axialverschiebung des Formgebungsteils (8; 8') relativ zum Spreizteil (9; 9') fest montiert ist.

5. Preßstempel nach einem der vorhergehenden Ansprüche, dadurch gekennzeichnet, daß der Formgebungsteil (8) einen inneren Becher (14) aufweist, dessen Kanten zusammen mit der Bodenplatte (16) einen ringsherum laufenden Schlitz (16; 18) bilden, durch den der Umfangsteil der Spreizscheibe (19) herausgetrieben werden kann, wenn die beiden Teile (8, 9) zusammenbewegt werden, daß dar Becher (14) im wesentlichen dieselbe Form und Größe wie der Hauptkörper des Formgebungsteils (8) hat und daß die Spreizscheibe (19) in dem Becher (14) auf- und abbewegbar ist.

6. Preßstempel nach einem der vorhergehenden Ansprüche, dadurch gekennzeichnet, daß die Spreizscheibe (19), die in ihrer Normalstellung becherförmig ist, mit einer Stützscheibe (21) zusammenwirkt, die während der gegenseitigen axialen Verschiebung des Formgebungsteils (8) und des Spreizteils (9) als Stütze für die Spreizscheibe (19) wirkt.

7. Preßstempel nach Anspruch 6 mit einer von der kreiszylindrischen Form abweichenden Querschnittsform, dadurch gekennzeichnet, daß die Stützscheibe (21) im wesentlichen dieselbe Form wie der Preßstempel hat, jedoch kleiner als dieser ist, und daß die Spreizscheibe (19) an oder nahe der äußeren Kante der Stützscheibe (21) fest montiert ist.

8. Preßstempel nach Anspruch 6 oder 7, dadurch gekennzeichnet, daß die Spreizscheibe (19') zwischen einer oberen und einer unteren Stützscheibe (22, 23) eingeklemmt ist, die eine sich nach unten und außen erstreckende Klemmnut mit einer Schulter (24) für die Spreizscheibe (19') bilden, wobei die Stützscheiben die Spreizscheibe (19') in die Becherform bringen, wenn zwischen ihnen ein ebener Spreizscheibenzuschnitt eingeklemmt wird.

9. Preßstempel nach Anspruch 8, dadurch gekennzeichnet, daß die Schulter (24) der Stützscheibe bzw. der Stützscheiben ein größeres Außenmaß (Durchmesser) als die Anschlußbohrung der aus elastischem Material bestehenden Spreizscheibe (19') in deren Normalstellung
hat.

**Revendications**

1. Piston expansible (4) de soudage de couvercles comprenant deux parties de piston, à savoir
une partie de formation (8; 8') et une partie d'expansion (9; 9'), qui sont mobiles axialement l'une
par rapport à l'autre, et dans lequel la partie d'expansion (9; 9') peut être manœuvrée, de façon à
produire une expansion périphérique d'une portion du piston (4) lorsque lesdites deux parties
sont rapprochées l'une de l'autre, la partie d'expansion (9; 9') comprenant un disque d'expansion (19; 19'), réalisé en une matière déformable
et la partie de formation (8; 8') comprenant une
plaque inférieure (16; 27) ayant une surface
supérieure supportant et guidant au moins une
partie de la surface inférieure du disque d'expansion (19; 19'), et dans lequel la surface périphérique extérieure de la plaque inférieure est de la
même forme que le bord périphérique extérieur
du disque d'expansion, caractérisé en ce que le
disque d'expansion (19; 19') est normalement en
forme de coupelle, en ce que la plaque inférieure
(16; 27) est au moins de la même dimension que
le bord périphérique extérieur du disque d'expansion (19; 19') dans son état normal, et que les
parties de formation et d'expansion (8, 9; 8'; 9')
sont agencées de manière qu'un mouvement
axial de ces parties les rapprochant l'une de
l'autre ait pour résultat d'aplatir le disque d'expansion (19; 19') à partir de sa forme en coupelle afin
que son bord périphérique extérieur s'étende au-
delà de la périphérie de la plaque inférieure.

2. Piston de pressage selon la revendication 1,
caractérisé en ce que le disque d'expansion (19;
19') est guidé fermement dans son mouvement à
la fois vers une position dans laquelle sa périphérie extérieure est radialement à l'extérieur de
celle de la plaque inférieure (8; 8') et en retour
vers une position rétractée dans laquelle sa périphérie extérieure est radialement vers l'intérieur
de ladite plaque inférieure (8, 9').

3. Piston de pressage selon la revendication 1
ou 2, caractérisé en ce que le disque d'expansion
(19) ou une partie de ce disque adjacente à sa
surface périphérique extérieure est sensiblement
d'épaisseur égale, et en ce que le disque est réalisé en caoutchouc, en matière plastique, en
caoutchouc armé ou en matière plastique armée,
ou bien est réalisé en métal.

4. Piston de pressage selon l'une quelconque
des revendications précédentes et de type cylindrique sensiblement circulaire, caractérisé en ce
que le disque d'expansion (19; 19') est monté
fixement sur ou à proximité de la tige centrale
pour le déplacement mutuel axial de la partie de
formation (8; 8') par rapport à la partie d'expansion (9; 9').

5. Piston de pressage selon l'une quelconque
des revendications précédentes, caractérisé en
ce que la partie (8) de formation est formée de
façon à comporter une coupelle intérieure (14)
dont les bords forment, en combinaison avec la
plaque inférieure (16), une fente (16; 18) s'étendant sur tout le pourtour et à travers laquelle la
partie périphérique du disque d'expansion (19)
peut être expulsée lorsque les deux parties (8, 9)
sont rapprochées l'une de l'autre, ladite coupelle
(14) étant sensiblement de la même forme et des
mêmes dimensions que le corps principal de la
partie (8) de formation, et le disque d'expansion
(19) pouvant être déplacé vers le haut et vers le
bas dans ladite coupelle (14).

6. Piston de pressage selon l'une quelconque
des revendications précédentes, caractérisé en
ce que le disque d'expansion (19), qui est en
forme de coupelle dans son état normal, coopère
avec un disque (21) de support qui agit à la manière d'un support pour le disque d'expansion
(19) durant le déplacement mutuel axial de la partie (8) de formation et de la partie (9) d'expansion.

7. Piston de pressage selon la revendication 6,
ayant, en coupe transversale, une forme autre
qu'une forme cylindrique circulaire, caractérisé en
ce que le disque (21) de support présente sensiblement la même forme que le piston de pressage, mais est plus petit que le piston de pressage, et en ce que le disque d'expansion (19) est
monté fixement sur le bord extérieur du disque
(21) de support ou à proximité de ce bord extérieur.

8. Piston de pressage selon la revendication 6
ou 7, caractérisé en ce que le disque d'expansion
(19') est bridé entre des disques de support
supérieur et inférieur (22, 23) qui forment une
gorge de bridage s'étendant vers l'extérieur et
vers le bas, ayant un épaulement (24) pour le
disque (19') d'expansion, lesquels disques donnent au disque (19') d'expansion une forme en
coupelle lorsqu'ils brident entre eux un flan de
disque d'expansion lisse.

9. Piston de pressage selon la revendication 8,
caractérisé en ce que l'épaulement (24) du disque ou des disques de support présente une
dimension (un diamètre) extérieure plus grande
que la lumière de liaison d'un disque d'expansion
(19') réalisé en une matière élastique dans son
état normal.

EP 0 247 986 B1

Fig. 1

Fig. 2

1

**Fig. 3**

**Fig. 4**

$dL$

13' 10' 13'

21' 19'

$dK$

**Fig. 5**

26

25

30 29 9'

31 19'

27 28 8'

**Fig. 6**